# EUROPEAN PATENT APPLICATION

(11) **EP 1 677 542 A2**
(43) Date of publication of application: **05.07.2006**
(21) Application number: 05020120.1
(22) Date of filing: 15.09.2005
(51) Int. Cl.: H04N 7/26

(54) **Method and system for video motion processing**

(30) Priority: 30.12.2004 US 640353 P; 07.02.2005 US 53000
(71) Applicant: Broadcom Corporation, Irvine, CA 92618-7013 (US)
(72) Inventor: Lu, Paul, Los Altos CA 94024 (US); Pan, Weiping, San Jose CA 95118 (US)
(74) Representative: Jehle, Volker Armin

(57) **Abstract**

Methods and systems for processing video data are disclosed herein and may comprise offloading motion estimation, motion separation, and motion compensation macroblock functions from a central processor to at least one on-chip processor for processing. For a current macroblock, reference video information may be generated via the on-chip processor by determining sum absolute difference between at least a portion of the current macroblock and at least a portion of a current search area comprising a plurality of macroblocks. Stored at least a portion of the current macroblock and/or the current search area may be received from an external memory and/or from an internal memory integrated with the on-chip processor. The sum absolute difference may be determined based on pixel luminance information corresponding to at least a portion of the current macroblock and at least a portion of the current search area.

## Description

### CROSS-REFERENCE TO RELATED APPLICATIONS/INCORPORATION BY REFERENCE

This application makes reference to, claims priority to, and claims the benefit of United States Provisional Application Serial No. 60/640,353, Attorney Docket No. 16232US01, filed December 30, 2004 and entitled "Method And System For Video Motion Processing In A Microprocessor."

This application is related to the following applications:
U.S. Patent Application Serial No. (Attorney Docket No. 16036US01), filed February 07, 2005, and entitled "Method And System For Image Processing In A Microprocessor For Portable Video Communication Device";
U.S. Patent Application Serial No. (Attorney Docket No. 16094US01), filed February 07, 2005, and entitled "Method And System For Encoding Variable Length Code (VLC) In A Microprocessor";
U.S. Patent Application Serial No. (Attorney Docket No. 16471US01), filed February 07, 2005, and entitled "Method And System For Decoding Variable Length Code (VLC) In A Microprocessor"; and
U.S. Patent Application Serial No. (Attorney Docket No. 16099US01), filed February 07, 2005, and entitled "Method And System For Video Compression And Decompression (CODEC) In A Microprocessor."

The above stated patent applications are hereby incorporated herein by reference in their entirety.

### FIELD OF THE INVENTION

Certain embodiments of the invention relate to processing of video data. More specifically, certain embodiments of the invention relate to a method and system for video motion processing in a microprocessor.

### BACKGROUND OF THE INVENTION

Video compression and decompression techniques, as well as different display standards, are utilized by conventional video processing systems, such as portable video communication devices, during recording, transmission, storage, and playback of video information. For example, common intermediate format (CIF) and video graphics array (VGA) format may be utilized for high quality playback and recording of video information, such as camcorder. The CIF format is also an option provided by the ITU-T's H.261/Px64 standard for videoconferencing codes. It may produce a color image of 288 non-interlaced luminance lines, each containing 352 pixels. The frame rate may be up to 30 frames per second (fps). The VGA format supports a resolution of 640 x 480 pixels and may be the most popular format utilized for high quality playback of video information on personal computers.

In addition, quarter common intermediate format (QCIF) may be utilized for playback and recording of video information, such as videoconferencing, utilizing portable video communication devices, for example, portable video telephone devices. The QCIF format is an option provided by the ITU-T's H.261 standard for videoconferencing codes. It produces a color image of 144 non-interlaced luminance lines, each containing 176 pixels to be sent at a certain frame rate, for example, 15 frames per second (fps). QCIF provides approximately one quarter the resolution of the common intermediate format (CIF) with resolution of 288 luminance (Y) lines each containing 352 pixels.

Conventional video processing systems for portable video communication devices, such as video processing systems implementing the QCIF, CIF, and/or VGA formats, may utilize video encoding and decoding techniques to compress video information during transmission, or for storage, and to decompress elementary video data prior to communicating the video data to a display. The video compression and decompression (CODEC) techniques, such as motion processing to remove temporal redundancy among consecutive frames, in conventional video processing systems for portable video communication devices utilize a significant part of the resources of a general purpose central processing unit (CPU) of a microprocessor, or other embedded processor, for computation-intensive tasks and data transfers during encoding and/or decoding of video data.

For example, video motion processing tasks, such as motion estimation, motion compensation, and motion separation, may be computation-intensive and may overload a general purpose CPU. Further, the general purpose CPU may also handle other real-time processing tasks, such as communication with other modules within a video-processing network during a video teleconference utilizing the portable video communication devices, for example. The increased amount of computation-intensive video processing tasks and data transfer tasks executed by the CPU and/or other processor, in a conventional QCIF, CIF, and/or VGA video processing system results in a significant decrease in the video quality that the CPU or processor may provide within the video processing network.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method for processing video data, substantially as shown in and/or described in connection with at least one of the figures, as set forth more completely in the claims.
According to an aspect of the invention, a method for processing video data is provided, the method comprising offloading motion estimation, motion separation, and motion compensation macroblock functions from a central processor to at least one on-chip processor for processing.
Advantageously, the method further comprises, for a current macroblock, generating via said at least one on-chip processor, reference video information by determining sum absolute difference between at least a portion of said current macroblock and at least a portion of a current search area comprising a plurality of macroblocks.
Advantageously, the method further comprises receiving stored said at least a portion of said current macroblock from at least one of an external memory and an internal memory integrated with said on-chip processor.
Advantageously, the method further comprises receiving stored said at least a portion of said current search area from at least one of an external memory and an internal memory integrated with said on-chip processor.
Advantageously, the method further comprises determining said sum absolute difference based on pixel luminance information corresponding to said at least a portion of said current macroblock and said at least a portion of said current search area.
Advantageously, the method further comprises determining a difference between said at least a portion of said current macroblock and said generated reference video information.
Advantageously, the method further comprises estimating said at least a portion of said current macroblock utilizing said generated reference video information and said determined difference.
Advantageously, the method further comprises generating half-pixel information for said reference video information, utilizing said at least a portion of said current search area.
Advantageously, the method further comprises terminating said motion estimation, if said determined sum absolute difference is greater than a previous sum absolute difference between said at least a portion of said current macroblock and at least a previous portion of said current search area.
Advantageously, the method further comprises, for a next macroblock, updating only a portion of said current search area that corresponds to a change from said current macroblock to said next macroblock.
According to an aspect of the invention, a machine-readable storage is provided having stored thereon, a computer program having at least one code section for processing video data, the at least one code section being executable by a machine to perform steps comprising offloading motion estimation, motion separation, and motion compensation macroblock functions from a central processor to at least one on-chip processor for processing.
Advantageously, the machine-readable storage further comprises, for a current macroblock, code for generating via said at least one on-chip processor, reference video information by determining sum absolute difference between at least a portion of said current macroblock and at least a portion of a current search area comprising a plurality of macroblocks.
Advantageously, the machine-readable storage further comprises code for receiving stored said at least a portion of said current macroblock from at least one of an external memory and an internal memory integrated with said on-chip processor.
Advantageously, the machine-readable storage further comprises code for receiving stored said at least a portion of said current search area from at least one of an external memory and an internal memory integrated with said on-chip processor.
Advantageously, the machine-readable storage further comprises code for determining said sum absolute difference based on pixel luminance information corresponding to said at least a portion of said current macroblock and said at least a portion of said current search area.
Advantageously, the machine-readable storage further comprises code for determining a difference between said at least a portion of said current macroblock and said generated reference video information.
Advantageously, the machine-readable storage further comprises code for estimating said at least a portion of said current macroblock utilizing said generated reference video information and said determined difference.
Advantageously, the machine-readable storage further comprises code for generating half-pixel information for said reference video information, utilizing said at least a portion of said current search area.
Advantageously, the machine-readable storage further comprises code for terminating said motion estimation, if said determined sum absolute difference is greater than a previous sum absolute difference between said at least a portion of said current macroblock and at least a previous portion of said current search area.
Advantageously, the machine-readable storage further comprises, for a next macroblock, code for updating only a portion of said current search area that corresponds to a change from said current macroblock to said next macroblock.
According to an aspect of the invention, a system for processing video data is provided, further comprising at least one on-chip processor that offloads motion estimation, motion separation, and motion compensation macroblock functions from a central processor for processing.
Advantageously, said at least one on-chip processor generates reference video information by determining sum absolute difference between at least a portion of said current macroblock and at least a portion of a current search area comprising a plurality of macroblocks, for a current macroblock.
Advantageously, said at least one on-chip processor receives stored said at least a portion of said current macroblock from at least one of an external memory and an internal memory integrated with said at least one on-chip processor.
Advantageously, said at least one on-chip processor receives stored said at least a portion of said current search area from at least one of an external memory and an internal memory integrated with said at least one on-chip processor.
Advantageously, said sum absolute difference is determined based on pixel luminance information corresponding to said at least a portion of said current macroblock and said at least a portion of said current search area.
Advantageously, said at least one on-chip processor determines a difference between said at least a portion of said current macroblock and said generated reference video information.
Advantageously, said at least one on-chip processor estimates said at least a portion of said current macroblock utilizing said generated reference video information and said determined difference.
Advantageously, said at least one on-chip processor generates half-pixel information for said reference video information, utilizing said at least a portion of said current search area.
Advantageously, said at least one on-chip processor terminates said motion estimation, if said determined sum absolute difference is greater than a previous sum absolute difference between said at least a portion of said current macroblock and at least a previous portion of said current search area.
Advantageously, said at least one on-chip processor updates only a portion of said current search area that corresponds to a change from said current macroblock to said next macroblock, for a next macroblock.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary video encoding system that may be utilized in connection with an aspect of the invention.

FIG. 1B is a block diagram of an exemplary video decoding system that may be utilized in connection with an aspect of the invention.

FIG. 2 illustrates an exemplary macroblock search area that may be utilized for video motion processing, in accordance with an embodiment of the invention.

FIG. 3 illustrates exemplary block and half-pixel macroblock locations that may be utilized during motion estimation, in accordance with an embodiment of the invention.

FIG. 4 is a block diagram of exemplary microprocessor architecture for video compression and decompression utilizing on-chip accelerators, in accordance with an embodiment of the invention.

FIG. 5 is a block diagram of a motion processing accelerator for video motion processing, in accordance with an embodiment of the invention.

FIG. 6 is a diagram illustrating exemplary reference memory utilization within the motion processing accelerator of FIG. 5, in accordance with an embodiment of the invention.

FIG. 7 is a flow diagram of an exemplary method for processing video data, in accordance with an embodiment of the invention.

### DETAILED DESCRIPTION OF THE INVENTION

Certain embodiments of the invention may be found in a method and system for processing video data. In an exemplary aspect of the invention, a dedicated module, such as a motion processing accelerator module, may be utilized to handle the motion estimation, separation, and compensation for a macroblock during video motion processing. In this manner, motion estimation, separation, and compensation tasks for video data processing may be offloaded from at least one on-chip video processor, thereby increasing video data processing efficiency. During motion estimation of a macroblock, the motion processing accelerator may be adapted to fetch a needed search area macroblock data and perform the estimation procedure autonomously. To increase processing speed and efficiency, the motion processing accelerator may be adapted to update only a portion of the macroblocks in the reference memory during processing of a current macroblock.

A sum absolute difference (SAD) may be calculated for a plurality of macroblocks in a reference memory. A reference macroblock, corresponding to a current macroblock, may then be determined utilizing the calculated SAD. During motion estimation, the motion processing accelerator may utilize an "early out" flag and may terminate an SAD accumulation for a determined reference in the reference memory, when the accumulation is over a known best match. During motion separation, the motion processing accelerator may utilize a reference macroblock in the reference memory and a current macroblock in the current memory to generate a delta. The motion processing accelerator may be adapted to write results out to a transformation module through a dedicated port, for example. During motion compensation, the motion processing accelerator may acquire the delta from a transformation module through a dedicated port, for example, and may utilize the delta with its reference to reconstruct a current macroblock.

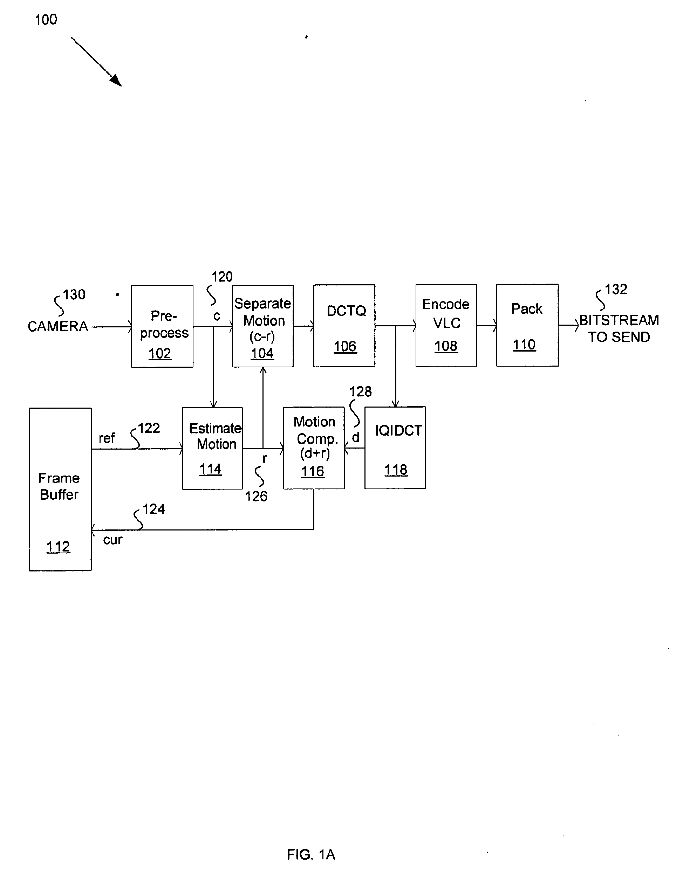

FIG. 1A is a block diagram of an exemplary video encoding system that may be utilized in connection with an aspect of the invention. Referring to FIG. 1A, the video encoding system 100 may comprise a pre-processor 102, a motion separation module 104, a discrete cosine transformer and quantizer module 106, a variable length code (VLC) encoder 108, a packer 110, a frame buffer 112, a motion estimator 114, a motion compensator 116, and an inverse quantizer and inverse discrete cosine transformer (IQIDCT) module 118.

The pre-processor 102 may comprise suitable circuitry, logic, and/or code and may be adapted to acquire video information from the camera 130, and convert the acquired camera video information to a YUV format. The motion estimator 114 may comprise suitable circuitry, logic, and/or code and may be adapted to acquire a current macroblock and its motion search area to determine a most optimal motion reference from the acquired motion search area for use during motion separation and/or motion compensation, for example. The motion separation module 104 may comprise suitable circuitry, logic, and/or code and may be adapted to acquire a current macroblock and its motion reference and determine one or more prediction errors based on the difference between the acquired current macroblock and its motion reference.

The discrete cosine transformer and quantizer module 106 and the IQIDCT module 118 may comprise suitable circuitry, logic, and/or code and may be adapted to transform the prediction errors to frequency coefficients and the frequency coefficients back to prediction errors. For example, the discrete cosine transformer and quantizer module 106 may be adapted to acquire one or more prediction errors and apply a discrete cosine transform and subsequently quantize the acquired prediction errors to obtain frequency coefficients. Similarly, the IQIDCT module 118 may be adapted to acquire one or more frequency coefficients and apply an inverse discrete cosine transform and subsequently inverse quantize the acquired frequency coefficients to obtain prediction errors.

The motion compensator 116 may comprise suitable circuitry, logic, and/or code and may be adapted to acquire a prediction error and its motion reference and to reconstruct a current macroblock based on the acquired prediction error and its motion reference. The VLC encoder 108 and the packer 110 comprise suitable circuitry, logic, and/or code and may be adapted to generate an encoded elementary video stream based on prediction motion information and/or quantized frequency coefficients. For example, prediction motion from one or more reference macroblocks may be encoded together with corresponding frequency coefficients to generate the encoded elementary bitstream. In one aspect of the invention, to increase the processing efficiency within the video encoding system 100, the VLC encoder 108 may be implemented in a coprocessor utilizing one or more memory modules to store VLC code and/or corresponding video attributes the VLC code may represent. The coprocessor may also comprise a bitstream handler (BSH) module, which may be utilized to manage generation of the encoded bitstream during encoding.

In operation, the pre-processor 102 may acquire video data from the camera 130, such as QCIF video data, and may convert the acquired camera video data to YUV-formatted video data. A current macroblock 120 may then be communicated to both the motion separation module 104 and the motion estimator 114. The motion estimator 114 may be configured to acquire one or more reference macroblocks 122 from the frame buffer 112 and may determine the motion reference 126 corresponding to the current macroblock 120. The motion reference 126 may then be communicated to both the motion separation module 104 and the motion compensator 116.

The motion separation module 104, having acquired the current macroblock 120 and its motion reference 126, may generate a prediction error based on a difference between the current macroblock 120 and its motion reference 126. The generated prediction error may be communicated to the discrete cosine transformer and quantizer module 106 where the prediction error may be transformed into one or more frequency coefficients by applying a discrete cosine transformation and a quantization process. The generated frequency coefficients may be communicated to the VLC encoder 108 and the packer 110 for encoding into the bitstream 132. The bitstream 132 may also comprise one or more VLC codes corresponding to the quantized frequency coefficients.

The frequency coefficients generated by the discrete cosine transformer and quantizer module 106 may be communicated to the IQIDCT module 118. The IQIDCT module 118 may transform the frequency coefficients back to one or more prediction errors 128. The prediction errors 128, together with its motion reference 126, may be utilized by the motion compensator 116 to generate a reconstructed current macroblock 124. The reconstructed macroblock 124 may be stored in the frame buffer 112 and may be utilized as a reference for macroblocks in the subsequent frame generated by the pre-processor 102.

In an exemplary aspect of the invention, video-processing tasks performed by the motion separation module 104, motion compensation module 116, and the motion estimation module 114 may be offloaded and performed by a single module. For example, within an exemplary video processing system, such as the video encoding system 100, motion estimation, motion compensation, and motion separation may be offloaded to a single motion processing accelerator module. The motion processing accelerator module may utilize sum absolute difference (SAD) to determine, for a current macroblock, corresponding reference video information within a plurality of reference macroblocks. During motion separation, a delta may be determined based on a difference between a current macroblock and a determined reference. During motion compensation, a current macroblock may be reconstructed utilizing a reference and a determined delta.

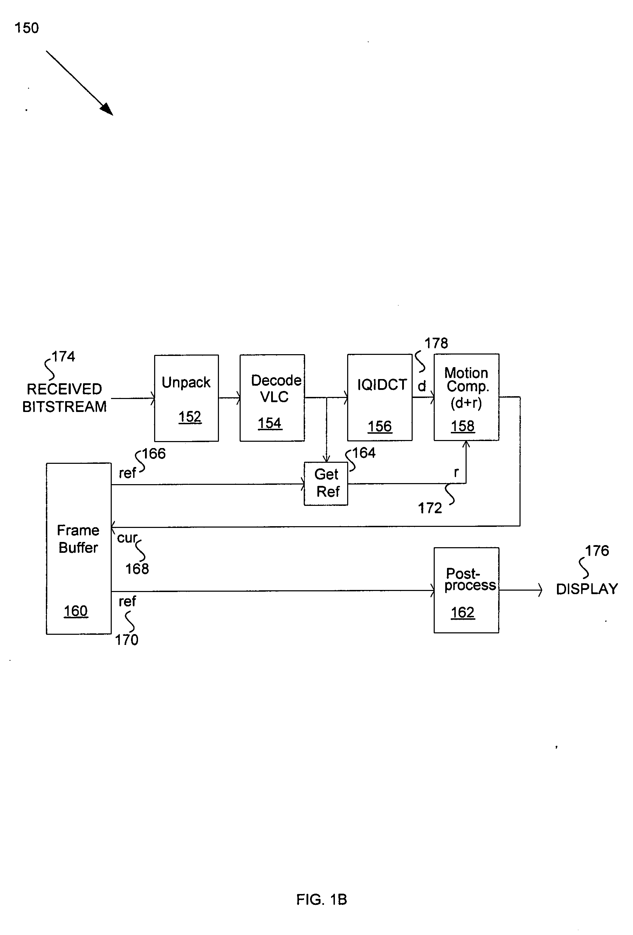

FIG. 1 B is a block diagram of an exemplary video decoding system that may be utilized in connection with an aspect of the invention. Referring to FIG. 1 B, the video decoding system 150 may comprise a bitstream unpacker 152, a VLC decoder 154, a motion reference-acquiring module 164, a frame buffer 160, an IQIDCT module 156, a motion compensator 158, and a post-processor 162.

The bitstream unpacker 152 and the VLC decoder 154 may comprise suitable circuitry, logic, and/or code and may be adapted to decode an elementary video bitstream and generate video information like the motion reference vectors and/or the corresponding quantized frequency coefficients for the prediction error of each macroblock. The IQIDCT module 156 may comprise suitable circuitry, logic, and/or code and may be adapted to transform one or more quantized frequency coefficients to one or more prediction errors. The motion compensator 158 may comprise suitable circuitry, logic, and/or code and may be adapted to acquire a prediction error and its motion reference to reconstruct a current macroblock. In one aspect of the invention, in order to increase the processing efficiency within the video decoding system 150, the VLC decoder 154 may be implemented in a coprocessor utilizing one or more memory modules to store VLC code and/or corresponding attributes. The coprocessor may also comprise a bitstream handler (BSH) module, which may be utilized to manage extracting bits from the bitstream for VLC matching during decoding.

In operation, the unpacker 152 and the VLC decoder 154 may decode an elementary video bitstream 174 and generate various video information, such as the motion reference and the corresponding quantized frequency coefficients of each macroblock. The generated motion reference vectors may then be communicated to the reference acquiring module 164 and the IQIDCT module 156. The reference-acquiring module 164 may acquire the motion reference 166 corresponding to the motion vectors from the frame buffer 160 and may generate a reference 172 corresponding to the quantized frequency coefficients. The reference macroblock 172 may be communicated to the motion compensator 158 for macroblock reconstruction.

The IQIDCT module 156 may transform the quantized frequency coefficients to one or more prediction errors 178. The prediction errors 178 may be communicated to the motion compensator 158. The motion compensator 158 may then reconstruct a current macroblock 168 utilizing the prediction errors 178 and its motion reference 172. The reconstructed current macroblock 168 may be stored in the frame buffer 160 for the reference of the subsequent frame and for displaying. The reconstructed frame 170 may be communicated from the frame buffer 160 to the post-processor 162 in a line-by-line sequence for displaying. The post-processor 162 may convert the YUV-formatted line from frame 170 to an RGB format and communicate the converted line to the display 176 to be displayed in a desired video format.

Referring to FIGS. 1 A and 1 B, in one aspect of the invention, one or more on-chip accelerators may be utilized to offload computation-intensive tasks from the CPU during encoding and/or decoding of video data. For example, one accelerator may be utilized to handle motion related computations, such as motion estimation, motion separation, and/or motion compensation. A second accelerator may be utilized to handle computation-intensive processing associated with discrete cosine transformation, quantization, inverse discrete cosine transformation, and inverse quantization. Another on-chip accelerator may be utilized to handle pre-processing of camera data to YUV format for encoding, and post-processing the decoded YUV data to RGB format for displaying. Furthermore, one or more on-chip memory (OCM) modules may be utilized to improve the time and power required to access data in the external memory during video data encoding and/or decoding. For example, an OCM module may be utilized during QCIF-formatted video data and may buffer one or more video frames that may be utilized during encoding and/or decoding. In addition, the OCM module may also comprise buffers for intermediate computational results during encoding and/or decoding such as discrete cosine transformation (DCT) coefficients and/or prediction error information.

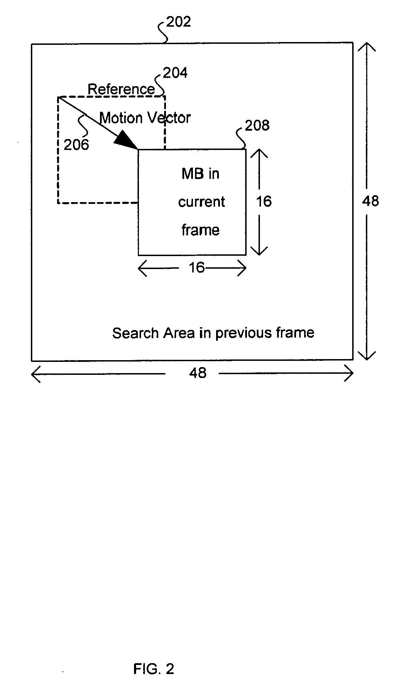

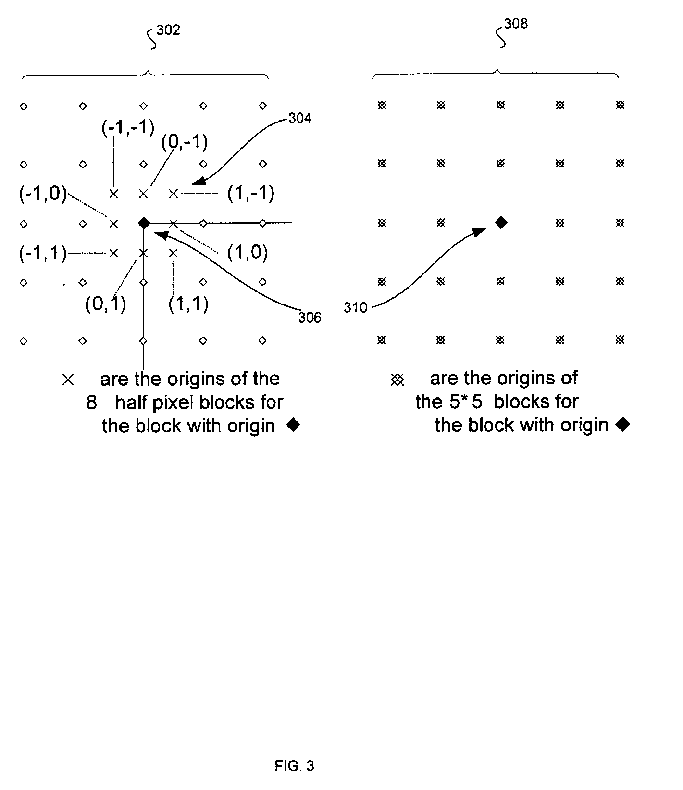

In an exemplary aspect of the invention, video data may be compressed by removing temporal redundancies between frames. An exemplary procedure to remove the redundancy is as follows. A frame may be divided into array of macroblocks (MB). Each MB may cover 16*16 pixels, and may be represented by one 8*8 chrominance U matrix, one 8*8 chrominance V matrix, and four 8*8 luminance Y matrices. The U and V matrices may be sub-sampled, since human eye is not as sensitive to the chrominance as it is to luminance. A frame may be compressed one MB a time, as described with regard to FIGS. 2 and 3.

FIG. 2 illustrates an exemplary macroblock search area that may be utilized for video motion processing, in accordance with an embodiment of the invention. Referring to FIG. 2, during motion estimation, a current MB 208 in a current frame may be compared with the image of its search area 202 in previous frame. The search area 202 may comprise a 48*48 pixels area in the previous frame.

The search may result in the position of the reference macroblock 204 for the current macroblock 208. The motion vector 206 may characterize the position of the reference macroblock 204 in relation to the current macroblock 208. During video encoding, the current macroblock 208 may be encoded by encoding the motion vector 206 and the delta, or difference, between the current macroblock 208 and its corresponding reference macroblock 204. In this regard, video-processing efficiency may be increased since the delta may comprise a smaller magnitude than the original image and may require fewer bits to record. During motion separation, the reference macroblock 204 may be subtracted from the current macroblock 208 to obtain the delta. During motion compensation, the reference macroblock 204 may be added back to the delta to restore the current macroblock 208.

FIG. 3 illustrates exemplary block and half-pixel macroblock locations that may be utilized during motion estimation, in accordance with an embodiment of the invention. During motion estimation, luminance information of a current macroblock may be compared with luminance information of one or more reference macroblocks in a reference memory. Referring to FIGS. 2 and 3, a typical motion estimation reference search may be represented as follows: (1) The current macroblock 208 may be initially matched with at least a portion of the 32*32 macroblocks in the search area 202 and a best match macroblock R1 may be determined; and (2) The current macroblock may then be matched with eight half-pixel macroblocks around R1. For example, one or more half-pixel macroblocks (HMB) 304 may be utilized within a plurality of macroblocks 302 during motion estimation when macroblock 306 is the R1 determined in step (1) above.

Accordingly, eight half-pixel macroblocks 304 with indexes HMB(-1,-1), HMB(0,-1), HMB(1,-1), HMB(-1,0), HMB(1,0), HMB(-1,1), HMB(0,1), and HMB(1,1) may be utilized during motion estimation for macroblock 306. Among the eight half-pixel macroblocks, the pixels in HMB(-1,0) and HMB(1,0) may be generated by averaging horizontal neighboring pixels. The pixels in HMB(0,-1) and HMB(0,1) may be generated by averaging vertical neighboring pixels. The pixels in HMB(-1,-1), HMB(1,-1), HMB(-1,1) and HMB(1,1) may be generated by averaging diagonal neighboring pixels, which may be obtained by averaging the horizontal neighboring pixels first and then averaging the horizontal half-pixel vertically.

During a subsequent step (3), each block in a current macroblock may be matched with a 5*5 block matrix 308 around a corresponding block 310 in macroblock R1; and (4) Each block may then be matched with the 8 half-pixel blocks around the best match found in the third step (half-pixel blocks not pictured in FIG. 3). In this regard, steps (1) and (2) above may be performed at the macroblock level and steps (3) and (4) may be performed at the block level, where each macroblock may comprise four blocks and each block may comprise 8x8 pixels.

The matching of a current and a reference macroblock may be evaluated by the sum of absolute difference (SAD) of the two macroblocks. In one embodiment of the invention, the SAD may be computed utilizing the following exemplary pseudo code:

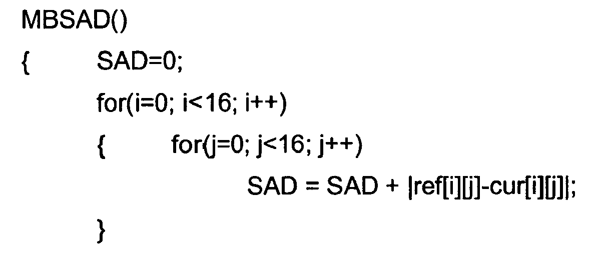

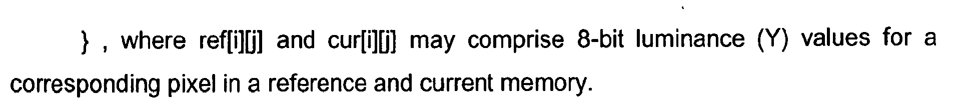

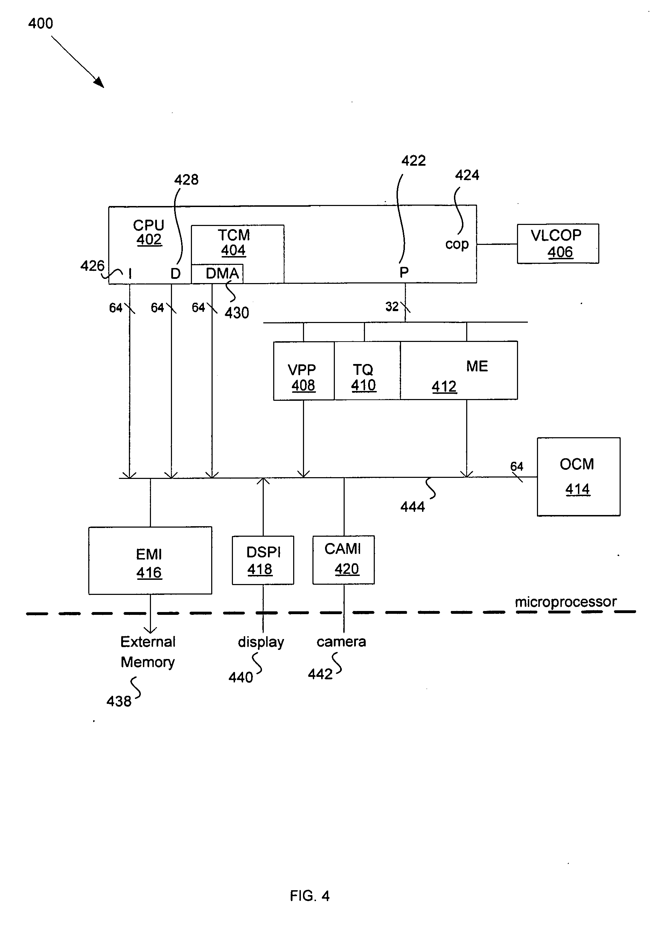

FIG. 4 is a block diagram of exemplary microprocessor architecture for video compression and decompression utilizing on-chip accelerators, in accordance with an embodiment of the invention. Referring to FIG. 4, the exemplary microprocessor architecture 400 may comprise a central processing unit (CPU) 402, a variable length code coprocessor (VLCOP) 406, a video pre-processing and post-processing (VPP) accelerator 408, a transformation and quantization (TQ) accelerator 410, a motion processing engine (ME) accelerator 412, an on-chip memory (OCM) 414, an external memory interface (EMI) 416, a display interface (DSPI) 418, and a camera interface (CAMI) 442. The EMI 416, the DSPI 418, and the CAMI 420 may be utilized within the microprocessor architecture 400 to access the external memory 438, the display 440, and the camera 442, respectively.

The CPU 402 may comprise an instruction port 426, a data port 428, a peripheral device port 422, a coprocessor port 424, tightly coupled memory (TCM) 404, and a direct memory access (DMA) module 430. The instruction port 426 and the data port 428 may be utilized by the CPU 402 to, for example, get the program and communicate data via connections to the system bus 444 during encoding and/or decoding of video information.

The TCM 404 may be utilized within the microprocessor architecture 400 for storage and access to large amounts of data without compromising the operating efficiency of the CPU 402. The DMA module 430 may be utilized in connection with the TCM 404 to transfer data from/to the TCM 404 during operating cycles when the CPU 402 is not accessing the TCM 404.

The CPU 402 may utilize the coprocessor port 424 to communicate with the VLCOP 406. The VLCOP 406 may be adapted to assist the CPU 402 by offloading certain variable length coding (VLC) encoding and/or decoding tasks. For example, the VLCOP 406 may be adapted to utilize techniques, such as code table look-up and/or packing/unpacking of an elementary bitstream, to work with CPU 402 on a cycle-by-cycle basis. In one aspect of the invention, the VLCOP 406 may comprise a table look-up (TLU) module with a plurality of on-chip memories, such as RAM, and may be adapted to store entries from one or more VLC definition tables. For example, an on-chip memory may be utilized by the VLCOP 406 to store a VLC code entry and another on-chip memory may be utilized to store corresponding description attributes the code may represent. In addition, a bitstream handler (BSH) module may also be utilized within the VLCOP 406 to manage generation of the encoded bitstream during encoding, and/or extraction of a token of bits from the encoded bitstream during decoding. In another aspect of the invention, the TLU module within the coprocessor may be adapted to store VLC code entries and corresponding description attributes from a plurality of VLC definition tables. Accordingly, each VLC code entry and/or description attributes entry may comprise a VLC definition table identifier.

The OCM 414 may be utilized within the microprocessor architecture 400 during pre-processing and post-processing of video data during compression and/or decompression. For example, the OCM 414 may be adapted to store pre-processed camera data communicated from the camera 442 via the VPP 408 prior to encoding of macroblocks. The OCM 414 may also be adapted to store RGB-formatted data after conversion from YUV-formatted data by VPP 408 and subsequent communication of such data to the video display 440 via the DSPI 418 for displaying.

In an exemplary aspect of the invention, the OCM 414 may comprise one or more frame buffers that may be adapted to store one or more reference frames utilized during encoding and/or decoding. In addition, the OCM 414 may comprise buffers adapted to store computational results and/or video data prior to encoding or after decoding and prior to output for displaying, such as DCT coefficients and/or prediction error information. The OCM 414 may be accessed by the CPU 402, the VPP accelerator 408, the TO accelerator 418, the ME accelerator 412, the EMI 416, the DSPI 418, and the CAMI 420 via the system bus 444.

The CPU 402 may utilize the peripheral device port 422 to communicate with the on-chip accelerators VPP 408, TQ 410, and/or ME 412. The VPP accelerator 408 may comprise suitable circuitry and/or logic and may be adapted to provide video data pre-processing and post-processing during encoding and/or decoding of video data within the microprocessor architecture 400. For example, the VPP accelerator 408 may be adapted to convert camera feed data to YUV-formatted video data prior to encoding. In addition, the VPP accelerator 408 may be adapted to convert decoded YUV-formatted video data to RGB-formatted video data prior to communicating the data to a video display. Post-processed video data from the VPP accelerator 408 may be stored in a local line buffer, for example, of the VPP accelerator 408. Post-processed video data in a VPP local line buffer may be in a QCIF format and may be communicated to, or fetched by, the DSPI 418 and subsequently to the display 440 for displaying. In a different aspect of the invention, the CPU 402 may perform post-processing of video data and post-processed data may be stored in the TCM 404 for subsequent communication to the DSPI 418 via the bus 444.

The TQ accelerator 410 may comprise suitable circuitry and/or logic and may be adapted to perform discrete cosine transformation and quantization related processing of video data, including inverse discrete cosine transformation and inverse quantization. The ME accelerator 412 may comprise suitable circuitry and/or logic and may be adapted to perform motion estimation, motion separation, and/or motion compensation during encoding and/or decoding of video data within the microprocessor architecture 400. In one aspect of the invention, the ME accelerator 412 may utilize on-chip reference memory, on-chip current memory, and/or the OCM 414 to store reference macroblock data and current macroblock data, respectively, during motion estimation, motion separation, and/or motion compensation. By utilizing the VLCOP 406, the VPP accelerator 408, the TQ accelerator 410, the ME accelerator 412, and the OCM 414 during encoding and/or decoding of video data, the CPU 402 may be alleviated from executing computation-intensive tasks associated with encoding and/or decoding of video data.

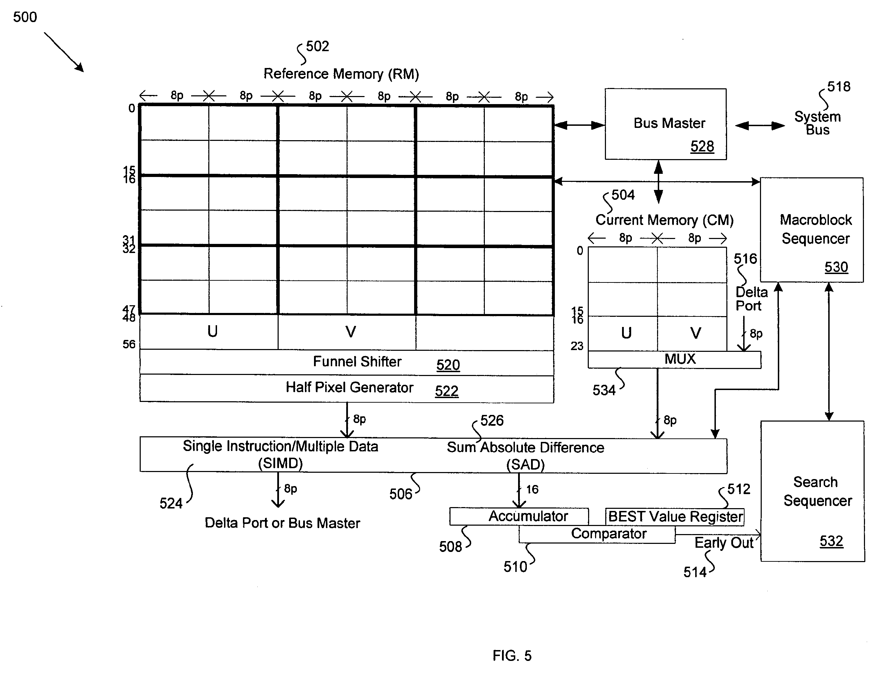

FIG. 5 is a block diagram of a motion processing accelerator for video motion processing, in accordance with an embodiment of the invention. Referring to FIG. 5, the motion processing accelerator 500 may comprise, for example, a bus master 528, a reference memory 502, a current memory 504, a funnel shifter 520, a half-pixel generator 522, an adder tree 506, an accumulator 508, a best value register 512, a comparator 510, a multiplexer 534, a search sequencer 532, and a macroblock sequencer 530.

The bus master 528 may comprise suitable circuitry and/or logic and may be utilized to fetch video data in a previous frame and in a current frame for video processing. For example, the bus master 528 may fetch via the system bus 518 one or more macroblocks in a previous frame and in a current frame, which may be stored in the reference memory 502 and the current memory 504, respectively. The reference memory (RM) may be adapted to hold luminance (Y) information for a plurality of macroblocks in a motion search area, as well as chrominance (U, V) information of at least one reference macroblock in the reference memory. The current memory may be adapted to hold Y, U, and/or V information of a current macroblock. The RM 502 may be adapted to hold luminance (Y) information of 3*3 macroblocks, which may be utilized during motion estimation, and chrominance (U, V) information for motion separation and/or motion compensation. The RM 502 may comprise 48 (16*3) pixels in width.

The current memory (CM) 504 may be adapted to store the Y, U, and V information for a current macroblock. More specifically, the CM 504 may store 16*16 pixels of luminance (Y) information and 8*8 pixels of chrominance (U and V) information. In instances where a special purpose hardware module may be utilized for handling the transformation of the delta after motion processing, the motion processing accelerator 500 may interface with the special hardware through a dedicated port. In this regard, the motion separation output delta may be communicated out to the dedicated hardware via the dedicated port. Furthermore, the motion compensation input delta may be obtained from the dedicated delta port 516. If there is no transformation module supporting the delta port, the motion processing accelerator 500 may utilize the system bus 518 for the input and output of the delta.

The funnel shifter 520 may comprise suitable circuitry and/or logic and may be adapted to extract the desired pixels out of a word line in the RM 502. For example, the funnel shifter 520 may extract a 1*48 pixel line from the RM 502 and may communicate the extracted pixel word line to the half pixel generator 522 for further processing.

The half-pixel generator 522 may comprise suitable circuitry and/or logic and may be adapted to generate the horizontal, vertical, and/or diagonal half-pixel averages utilized during motion estimation. In addition, the half-pixel generator 522 may comprise a line buffer (not pictured in FIG. 5) to hold the results of a current cycle, which may be utilized to generate the vertical and/or diagonal averages in a subsequent cycle.

The adder tree 506 may comprise suitable circuitry and/or logic and may be adapted to provide support functionalities during motion estimation, motion compensation, and/or motion separation. For example, during motion estimation, the adder tree 506 may accumulate a sum of absolute difference (SAD) 526 of 8 pixels per cycle. During motion separation, the adder tree 506 may utilize a single instruction/multiple data (SIMD) instruction 524 to subtract a reference from RM 502 determined during motion estimation from the current macroblock in CM 504, at a rate of 8 pixels per cycle, to determine a difference, or a delta. During motion compensation, the adder tree 506 may utilize the SIMD instruction 524 to add up the determined reference from RM 502 to the delta at a rate of 8 pixels per cycle, to obtain a reconstructed current macroblock.

During a single motion estimation cycle, the adder tree 506 may determine an SAD 526 for the current macroblock and a single reference macroblock in the RM 502. The determined SAD 526 for a single motion estimation cycle may be stored in the accumulator 508. The best value register 512 may store a current best SAD value determined for a given current macroblock. The comparator 510 may be adapted to compare the SAD accumulator 508 with the contents of the best value register 512, where the best value register 512 may store the best final SAD a current macroblock has achieved so far. For example, during a first motion estimation cycle, the best value register 512 may store the determined SAD 526. For each subsequent motion estimation cycle for a given current macroblock, the comparator 510 may compare the determined SAD value with the SAD value stored in the best value register.

If the determined SAD is smaller than the SAD stored in the best value register 512, then the best value register 512 may store the currently determined SAD. If the determined SAD is larger than the SAD stored in the best value register 512, then the best value register 512 may not be changed and a new motion estimation cycle may begin. When the accumulator 508 is over the best final SAD value stored in the best value register 512, an "early out" flag 514 may be communicated to the search sequencer 532 so that the search sequencer 532 may abort the matching and start evaluation of a subsequent macroblock candidate in the search area stored in the RM 502. If the SAD of a candidate reference macroblock is completed without elimination, the final SAD of the candidate reference may be stored in the best value register 512 and its location may be stored in a motion vector register.

During motion separation, a delta may be determined utilizing the SIMD instruction 524 in the adder tree 506. For example, a current macroblock may be subtracted from a reference macroblock determined during motion estimation, to generate a difference, or a delta. Similarly, during motion compensation, a current macroblock may be reconstructed utilizing addition with the SIMD instruction 524 and adding a determined delta and a reference macroblock.

The macroblock sequencer 530 may comprise suitable circuitry, logic, and/or code and may be adapted to generate control signals for task sequencing during one or more sessions of macroblock matching for motion estimation, motion separation, and/or motion compensation. The search sequencer 532 may comprise suitable circuitry, logic, and/or code and may be adapted to generate control signals to the macroblock sequencer 530 for a session of motion estimation.

In operation, during motion estimation, reference and current video information may be communicated by the bus master 528 via the system bus 518 and may be stored in the RM 502 and the CM 504, respectively. The funnel shifter 520 may read a pixel word line from the RM 502 and may communicate the extracted pixels to the half-pixel generator 522 for further processing. The half-pixel generator 522 may acquire the extracted pixels from the funnel shifter 520 and may generate one or more half-pixel values for use during motion estimation calculations, such as SAD calculations. The adder tree 506 may utilize the determined half-pixel information, as well as reference video information and current macroblock information from the RM 502 and the CM 504, respectively, to calculate SAD values for a plurality of macroblocks in the reference memory 502 corresponding to a single macroblock in the current memory 504. The accumulator 508, the best value register 512, and the comparator 510 may be utilized to determine the best SAD for a given current macroblock and a corresponding reference macroblock in the RM 502.

During motion separation, the adder tree 506 may utilize subtraction with the SIMD instruction 524 to determine a delta, or a difference, between a current macroblock and a corresponding reference macroblock determined during motion estimation. The delta may be communicated by the adder tree 506 to a delta port or the bus master 528 for further processing.

During motion compensation, if the delta is acquired via the delta port, for example, the multiplexer 534 may be utilized to communicate the delta to the adder tree 506 and the adder tree 506 may utilize adding with the SIMD instruction 524 to add the delta to a determined reference macroblock to reconstruct a current macroblock.

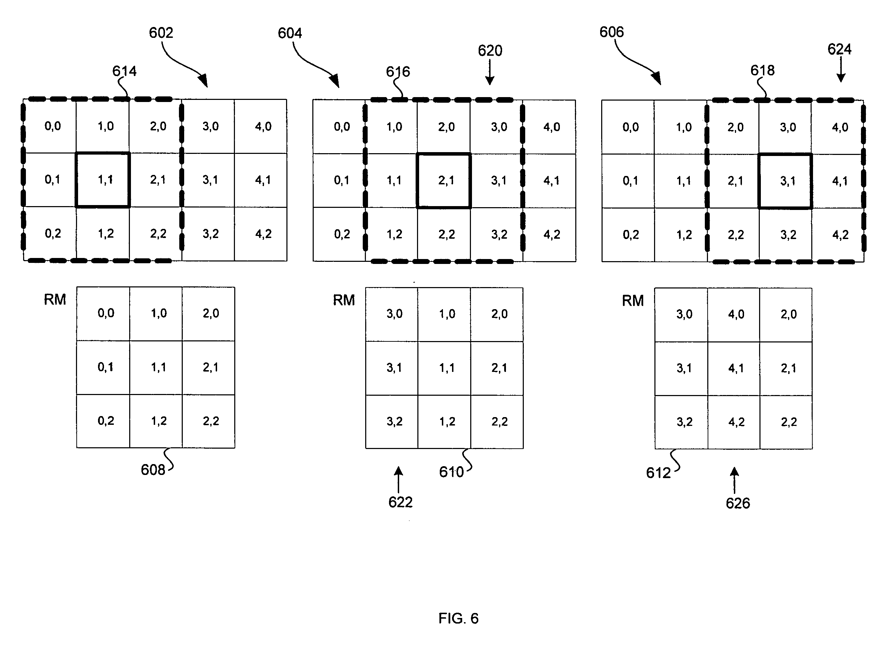

FIG. 6 is a diagram illustrating exemplary reference memory utilization within the motion processing accelerator of FIG. 5, in accordance with an embodiment of the invention. Referring to FIG. 6, a search area for a current macroblock corresponding to macroblock (1,1) may comprise a portion 614 from a frame portion 602. The portion 614 may be loaded in a reference memory 608 and may be utilized during motion estimation. After motion estimation in RM 608 is complete, motion estimation for a next macroblock may be initiated, such as a current macroblock corresponding to macroblock (2,1) in the previous frame portion 604. Similarly, a search area for a current macroblock corresponding to macroblock (2,1) may comprise a portion 616 from the frame portion 604.

The portion 616 may be loaded in a reference memory 610 and may be utilized during motion estimation. In this regard, the search areas of the two adjacent current macroblocks may comprise 2*3 reference macroblocks overlapped as illustrated in FIG. 6. As search area changes from portion 614 to portion 616, a new macroblock column 620 may be utilized within portion 616. A corresponding new column 622 may then be updated in reference memory 608 with macroblock data from column 620. Consequently, only the first macroblock column in RM 608 may be updated with new macroblock column 622 to obtain RM 610.

Similarly, as search area changes from portion 616 to portion 618, a new macroblock column 624 may be utilized within portion 618. A corresponding new column 626 may then be updated in reference memory 610 with macroblock data from column 624. Consequently, only the middle macroblock column in RM 610 may be updated with new macroblock column 624 to obtain RM 612.

In an exemplary aspect of the invention, to reduce macroblock fetching in the search area, a motion processing accelerator may comprise circuitry, which allows, for example, the three reference macroblock columns in a reference memory to be arranged in a rotation fashion, as illustrated in FIG. 6. For example, suitable macroblock column rotation circuitry may be utilized in accordance with a funnel shifter, such as the funnel shifter 520 in FIG. 5. In this regard, only 1*3 reference macroblocks may need to be fetched for a new current macroblock. For a current macroblock that is close to the edges of a frame, the search area may be out of a frame. The motion processing accelerator may then utilize padding to fill the out-of-frame area. The motion processing accelerator may perform padding during motion search for border macroblocks.

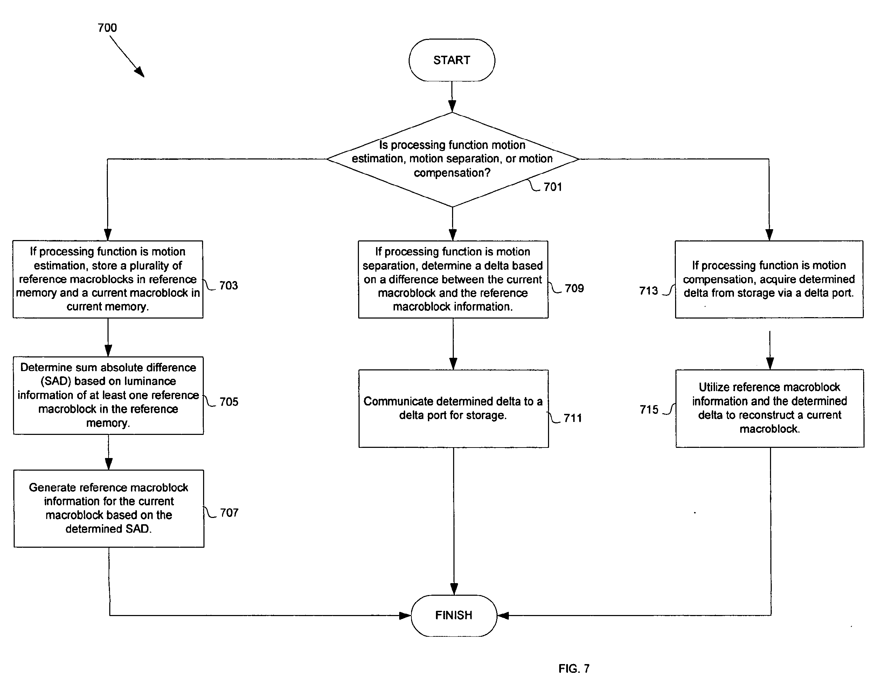

FIG. 7 is a flow diagram of an exemplary method 700 for processing video data, in accordance with an embodiment of the invention. Referring to FIG. 7, at 701, it may be determined whether a requested video processing function is motion estimation, motion compensation, or motion separation. At 703, if the processing function is motion estimation, a plurality of reference macroblocks may be stored in a reference memory and a current macroblock may be stored in a current memory. At 705, one or more sum of absolute difference (SAD) values may be determined for a current macroblock, based on luminance information of at least one reference macroblock in the reference memory. At 707, reference macroblock information for the current macroblock may be generated, based on the determined SAD. If the processing function is motion separation, at 709, a delta, or a difference, may be determined based on a difference between the current macroblock and the reference macroblock information. At 711, the determined delta may be communicated to a delta port for storage. If the processing function is motion compensation, at 713, determined delta may be acquired from storage via a delta port. At 715, a current macroblock may be reconstructed utilizing the reference macroblock information and the determined delta.

Accordingly, the present invention may be realized in hardware, software, or a combination of hardware and software. The present invention may be realized in a centralized fashion in at least one computer system or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing video data, the method comprising offloading motion estimation, motion separation, and motion compensation macroblock functions from a central processor to at least one on-chip processor for processing.

2. The method according to claim 1, further comprising, for a current macroblock, generating via said at least one on-chip processor, reference video information by determining sum absolute difference between at least a portion of said current macroblock and at least a portion of a current search area comprising a plurality of macroblocks.

3. The method according to claim 2, further comprising receiving stored said at least a portion of said current macroblock from at least one of an external memory and an internal memory integrated with said on-chip processor.

4. The method according to claim 2, further comprising receiving stored said at least a portion of said current search area from at least one of an external memory and an internal memory integrated with said on-chip processor.

5. A machine-readable storage having stored thereon, a computer program having at least one code section for processing video data, the at least one code section being executable by a machine to perform steps comprising offloading motion estimation, motion separation, and motion compensation macroblock functions from a central processor to at least one on-chip processor for processing.

6. The machine-readable storage according to claim 5, further comprising, for a current macroblock, code for generating via said at least one on-chip processor, reference video information by determining sum absolute difference between at least a portion of said current macroblock and at least a portion of a current search area comprising a plurality of macroblocks.

7. A system for processing video data, further comprising at least one on-chip processor that offloads motion estimation, motion separation, and motion compensation macroblock functions from a central processor for processing.

8. The system according to claim 7, wherein said at least one on-chip processor generates reference video information by determining sum absolute difference between at least a portion of said current macroblock and at least a portion of a current search area comprising a plurality of macroblocks, for a current macroblock.

9. The system according to claim 8, wherein said at least one on-chip processor receives stored said at least a portion of said current macroblock from at least one of an external memory and an internal memory integrated with said at least one on-chip processor.

10. The system according to claim 8, wherein said at least one on-chip processor receives stored said at least a portion of said current search area from at least one of an external memory and an internal memory integrated with said at least one on-chip processor.
